# FASCICULE DE BREVET EUROPEEN

(11) **EP 1 792 147 B1**
(45) Date de publication et mention de la délivrance du brevet: **02.04.2014**
(21) Numéro de dépôt: 05802440.7
(22) Date de dépôt: 14.09.2005
(51) Int. Cl.: G01G 19/50

(54) **PESE-PERSONNE IMPEDANCEMETRE**
IMPEDANZMESSER-PERSONENWAAGE
IMPEDANCE MEASURING BATHROOM SCALE

(30) Priorité: 20.09.2004 FR 0409917
(43) Date de publication de la demande: 06.06.2007
(73) Titulaire: SEB S.A., 69130 Ecully (FR)
(72) Inventeur: LINGLIN, Benoît, F-74350 CRUSEILLES (FR)
(74) Mandataire: Kiehl, Hubert
(86) Numéro de dépôt international: PCT/FR2005/002279
(87) Numéro de publication internationale: WO 2006/032758

(56) Documents cités:
- WO-A-2004/046665
- FR-A- 2 852 101
- BONNO B: "Sensation du chaud et du froid" 30 mars 2001 (2001-03-30), , XP002263011 le document en entier

## Description

La présente invention concerne un appareil de mesure de la composition corporelle, notamment du type pèse-personne comportant un circuit électrique de mesure de l'impédance bioélectrique d'une personne associé à une unité de calcul du pourcentage de masse grasse, du contenu d'eau dans l'organisme ou d'un autre paramètre lié au métabolisme humain.

Un tel appareil de mesure de la composition corporelle est décrit dans le document FR 2 830 740 au nom de la demanderesse. Cet appareil comporte un plateau de mesure supporté par des capteurs de poids reliés à un circuit électrique commun et à un afficheur. Le circuit comprend également un module électronique destiné à mesurer une impédance bioélectrique, ainsi qu'une source d'énergie électrique destinée à générer un signal électrique variable qui traverse le corps de l'individu. Le signal est envoyé à travers le corps de l'individu par deux électrodes d'excitation et le signal résultant est mesuré aux bornes de deux électrodes de mesure. Les électrodes sont réalisées en acier et sont portées par un plateau de mesure réalisé, lui, en une matière plastique. Lors d'une prise de mesure, l'utilisateur se place debout sur le plateau de mesure, ses pieds nus prenant appui sur les électrodes. Fonctionnant à satisfaction, cet appareil offre toutefois peu de confort en utilisation, une sensation de froid est souvent ressentie au contact des pieds de l'utilisateur avec les masses métalliques importantes des électrodes. De surcroît, les possibilités de design de ces appareils sont limitées par la présence des électrodes métalliques qui occupent une surface importante du plateau de mesure.

Le document EP 1 212 981 décrit un pèse-personne impédancemètre comportant un plateau supérieur en résine à électrodes surmoulées. Les quatre électrodes sont d'abord moulées en une résine conductrice, les câbles de connexions étant noyés dans la résine. Le plateau est formé ensuite en surmoulant les électrodes avec une partie électriquement isolante. Un afficheur est fixé à ce plateau, l'ensemble étant ensuite monté sur un support métallique inférieur. Les câbles de connexion des électrodes sont soudés à une plaque électronique centrale. Un tel appareil présente, certes, un meilleur confort de pesée et la possibilité de réaliser des électrodes en résine colorée, mais il présente l'inconvénient de nécessiter plusieurs étapes de surmoulage et d'autres étapes supplémentaires d'assemblage qui augmentent le temps de fabrication et donc le prix de l'appareil.

Le document EP 1 125 550 décrit un autre type d'appareil de mesure de la composition corporelle où les électrodes sont réalisées par un dépôt conducteur en couche mince sur un plateau plan réalisé en verre ou en résine. Cet appareil assure, certes, une bonne transparence du plateau de mesure et un meilleur confort au contact des pieds avec les électrodes que l'appareil décrit précédemment, mais au prix d'une réalisation délicate et assez coûteuse.

Un autre pèse-personne impédancemètre est décrit dans le document EP 1 336 826 où l'appareil comporte un plateau supérieur en verre sur lequel sont déposées, par une technique de dépôt en couche mince, des pistes conductrices formant les électrodes et leurs connexions. Un tel dépôt s'avère à terme très peu résistant, l'usure par abrasion d'une piste conductrice pouvant rendre l'appareil non fonctionnel. Par ailleurs, les pistes conductrices sont réalisées par un dépôt d'encre conductrice qui est chère, car elle intègre des matériaux conducteurs coûteux et, de surcroît, le choix des couleurs de ces encres ou pâtes conductrices est extrêmement limité.

Le but de la présente invention est de remédier au moins en partie aux inconvénients précités et de proposer un appareil de mesure de la composition corporelle apte à éviter la sensation de froid au contact des électrodes métalliques, tout en permettant de réaliser des designs avantageux de ces dernières et du plateau de mesure les supportant.

Un autre but de l'invention est un appareil de mesure de la composition corporelle de construction simple et robuste, tout en étant fiable en fonctionnement et en pouvant être industrialisé pour un coût de fabrication réduit.

Ces buts sont atteints avec un pèse-personne impédancemètre comportant un plateau de mesure supporté par une base de pesée qui comprend au moins un capteur de poids, le plateau de mesure étant muni d'au moins deux électrodes destinées au contact des pieds de l'individu lors d'une prise de mesure, lesdites électrode étant reliées à un circuit électrique de mesure de l'impédance bioélectrique et d'affichage de la composition corporelle de l'individu, du fait que la partie de contact desdites électrodes comporte un support ou une couche en un matériau électriquement conducteur partiellement recouvert d'un dépôt en un matériau électriquement isolant.

Les électrodes sont, de préférence, métalliques (en acier de préférence inoxydable, en aluminium, en cuivre, etc.), mais elles peuvent également être réalisées en un polymère chargé en noir de carbone, en une résine conductrice voire même sous forme d'une couche ou d'un dépôt électriquement conducteur sur une base isolante.

Ces électrodes, lorsqu'elles sont réalisées sous forme de deux plaques métalliques sensiblement planes ou sous forme d'un maillage métallique sensiblement plan, sont intégrées au plateau de mesure de l'appareil par une technique de surmoulage ou par une fixation mécanique au plateau. Le plateau de mesure est, lui, réalisé de préférence en un matériau plastique ou un autre matériau électriquement isolant opaque ou transparent.

Par dépôt partiel d'un matériau électriquement isolant (matériau isolant comme, par exemple, une encre ou un vernis électriquement isolants, un dépôt de fibres textiles réalisé par flocage, un dépôt de fibres tissées, un maillage, etc.) on comprend que la surface des électrodes est uniquement en partie recouverte par un tel dépôt, l'autre partie demeurant électriquement conductrice afin d'assurer un bon contact avec la plante des pieds de l'utilisateur. Lors des tests effectués en laboratoire, il a été constaté que, dans le cas d'une électrode métallique plane, une surface conductrice d'au moins 0.5cm² assure de bonnes conditions de mesure d'impédance d'un individu, la surface restante de l'électrode pouvant alors être recouverte d'un dépôt en un matériau électriquement isolant.

Ainsi, un tel dépôt partiel de matériau électriquement isolant sur un support en un matériau électriquement conducteur de l'électrode assure, à la fois, un bon contact avec la plante des pieds de l'utilisateur, et un bon confort de contact, ce matériau de dépôt ayant de bonnes propriétés esthétiques, de toucher doux ou anti-glisse.

Avantageusement, ledit matériau électriquement isolant est déposé de manière à délimiter sur ledit support au moins deux surfaces électriquement conductrices et un pont conducteur les reliant.

La surface électriquement conductrice de l'électrode peut être recouverte d'un ou plusieurs traits ou surfaces en un matériau électriquement isolant, répartis de manière plus ou moins uniforme et recouvrant une partie de l'électrode. La surface électriquement conductrice restante doit être égale ou supérieure à 0.5cm², elle peut être très localisée (en forme de cercle, carré, etc.) ou peut s'étendre, par exemple, selon l'une des diagonales de l'électrode. Par ailleurs, lorsque le ou les traits de dépôt isolant délimitent au moins deux surfaces conductrices et un pont conducteur les reliant, la surface de contact augmente et accepte plusieurs dimensions de contact des pieds (ex. le matériau isolant peut être déposé au centre, laissant une périphérie conductrice ou/et être déposé latéralement par rapport à un axe médian laissant apparaître un trait vertical au milieu ou/et un trait horizontal ou le dépôt peut se faire sous forme de hachures, etc.).

De préférence, ledit matériau électriquement isolant est un vernis ou une encre d'imprimerie.

Les encres ou les vernis d'imprimerie ont à la fois de bonnes propriétés esthétiques car ils sont disponibles en une large palette de couleurs et ils présentent de bonnes propriétés de brillance, tout en pouvant être facilement appliqués, sous forme de traits très fins sur un support plan par une technique d'imprimerie. Un tel dépôt permet donc d'obtenir des électrodes colorées accordées ou assorties à la surface du plateau de mesure. On choisit toutefois, parmi les encres et vernis d'imprimerie ceux qui présentent de bonnes propriétés de résistance au frottement, ainsi qu'au nettoyage à l'aide des produits d'entretien tels l'alcool, l'eau, le savon ou le détergent. A titre d'exemple, on préfère les encres époxy car elles répondent de manière satisfaisante à ces exigences.

Avantageusement, ledit matériau isolant est déposé sous forme de plusieurs traits rapprochés sur ledit support.

De tels traits (ensemble de lignes, courbes ou points) rapprochés, ayant les mêmes dimensions (largeur ou longueur des traits) ou des dimensions différentes, peuvent alors réaliser un certain .motif ou dessin de l'électrode. De surcroît, avec un tel dépôt on peut obtenir des dégradés, des ombrés ou des combinaisons de couleurs pour un effet esthétique recherché.

De préférence, ledit matériau isolant est déposé sous forme de plusieurs points rapprochés et uniformément répartis sur le support conducteur.

Les points sont des fines demi sphères d'encre ou de vernis déposées uniformément sur la surface de l'électrode tout en gardant, entre ces points une surface de contact, électriquement conductrice, non couverte. Un tel dépôt est facile à réaliser par une technique d'imprimerie ou de pulvérisation et donne l'impression, vu à distance, d'une coloration globale de la totalité de la surface de l'électrode. Les points ainsi déposés peuvent être soit isolés, soit, à la limite, devenir tangents ou se toucher, mais à condition que l'épaisseur du dépôt soit suffisamment réduite pour que la plante des pieds puisse être suffisamment en contact avec les parties conductrices restantes ou non couvertes de la surface de l'électrode.

Avantageusement, ledit matériau isolant présente une trame de 60 points/cm pour une couvrance inférieure ou égale à 50%.

Par couvrance (ou recouvrement) on comprend le pourcentage de surface couverte par le dépôt par rapport à la surface totale de l'électrode. Ainsi, il a été constaté, lors des tests effectués en laboratoire, qu'un tel dépôt de matériau isolant sous forme de points uniformément répartis présentant une trame de 60 points/cm et une couvrance égale ou inférieure à 50% donne des résultats de mesure de l'impédance équivalents à ceux effectués avec des électrodes en inox non couvertes par un dépôt en matériau électriquement isolant.

De surcroît, une telle couvrance peut facilement être obtenue par un dépôt d'encre par une technique d'imprimerie, sans que les points se touchent, ce qui permet donc d'obtenir une surface isolante réalisée par des points de couleur, tout en présentant des ponts conducteurs entre les points isolants. En effet, lors de niveaux de couvrance importants (supérieurs à 50%), il arrive souvent qu'une grande partie des surfaces non recouvertes le deviennent car, lorsque la couvrance est importante, les points d'encre deviennent tangents ou se recouvrent, induisant des surplus d'encre sur toute la surface de l'électrode à recouvrir. Ce surplus peut alors, par effet de tension superficielle, recouvrir les surfaces non couvertes au moment du dépôt. De plus, ces points formant des demi sphères isolantes déposées sur la surface électriquement conductrice de l'électrode pourraient, de par leur hauteur, empêcher le contact de la peau de l'utilisateur avec la partie conductrice non couverte lorsque ces points se trouvent trop rapprochés.

Utilement, ledit dépôt est réalisé par une technique de sérigraphie sur ledit support.

Un tel dépôt d'encre ou de vernis peut être réalisé par une technique de pulvérisation, du type jet d'encre, ou toute autre technique d'imprimerie permettant de déposer des points rapprochés, tout en conservant une surface électriquement conductrice de contact de l'électrode suffisante pour effectuer des mesures d'impédance bioélectrique d'un individu. On préfère toutefois une technique de sérigraphie car elle est simple à mettre en oeuvre, notamment dans un processus industriel de fabrication d'électrodes métalliques à base de bande d'acier découpée. Ainsi, ce dépôt peut être effectué sur l'électrode déjà découpée et emboutie. Dans un autre mode de fabrication, le dépôt par sérigraphie peut s'effectuer sur les bandes d'acier avant découple, ces dernières pouvant être déroulées, sérigraphiées, puis ré-enroulées en vue d'une découpe ultérieure, sans modification des flux de production.

Dans une variante de réalisation de l'invention, ledit matériau isolant est une résine polyuréthane ou une colle acrylique ou époxy déposées sous forme de plusieurs traits rapprochés sur ladite couche ou sur ledit support en un matériau électriquement conducteur.

Un tel dépôt a l'avantage d'être transparent, tout en étant facile à déposer sur le support conducteur de l'électrode. Un tel dépôt permet de garder l'apparence esthétique de la partie conductrice, tout en offrant d'excellentes qualités de toucher doux ou antiglisse.

En pratique, ces traits s'avèrent être des traits en relief et, de ce fait il faut respecter une distance minimum entre deux traits en relief. Cette distance est proportionnelle à la hauteur des traits en relief. En effet plus les traits en un matériau électriquement isolant sont saillants et rapprochés, plus ils auront tendance à écarter la plante des pieds de l'individu du contact avec la surface électriquement conductrice de base. Ainsi, cette distance doit être au moins deux fois supérieure à la hauteur des traits.

L'invention sera mieux comprise à l'étude des modes de réalisation pris à titre nullement limitatif et illustrés dans les figures annexées dans lesquelles :
- la figure 1 est une vue en perspective de l'appareil de l'invention;
- la figure 2a représente une électrode de l'appareil de la figure 1 et la figure 2b est une vue à échelle agrandie du détail A de la figure 2a.

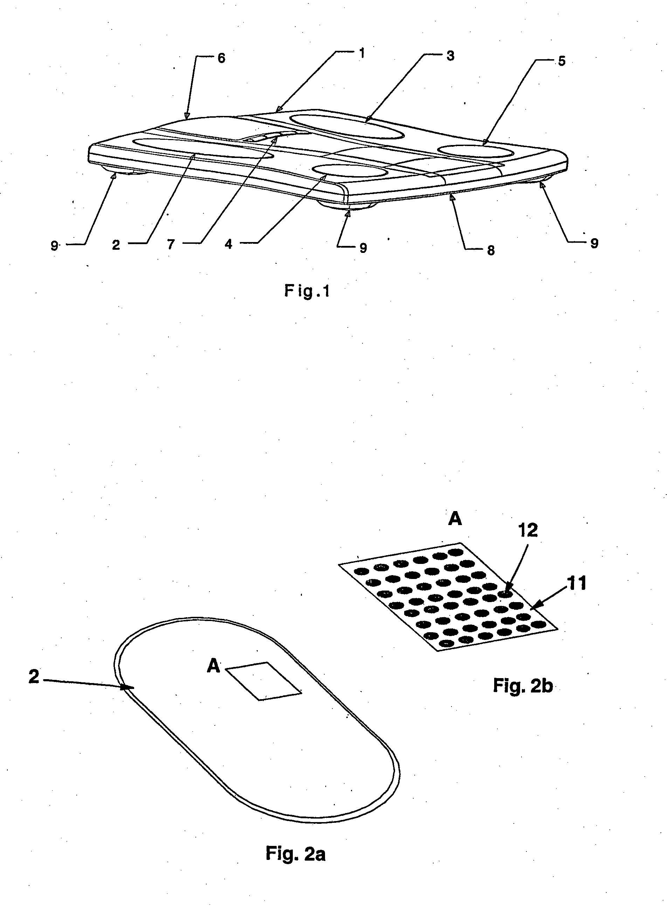

La figure 1 illustre une vue en perspective d'un pèse-personne impédancemètre selon la présente invention comprenant, en partie supérieure, un plateau 1 muni d'électrodes d'excitation 2,3 et d'électrodes de mesure 4,5, ainsi que d'une fenêtre d'affichage 6. Plusieurs boutons 7 sont agencés à côté de la fenêtre d'affichage 6 et servent à naviguer dans le menu proposé à l'écran de l'afficheur, notamment pour entrer la valeur de l'âge, le type de sexe, la taille, etc., pour valider les valeurs saisies, pour appeler une mémoire, ou encore pour afficher à l'écran un type spécifique de paramètre mesuré, son historique, etc..

Le plateau 1 est fermé en partie inférieure par un socle 8 à travers lequel passent des pieds 9 prenant appui sur le sol. Chaque pied 9 renferme un capteur de poids à jauges de contrainte tel que par exemple décrit dans le document FR 2 734 050 au nom de la demanderesse, l'une des zones d'appui du capteur de poids étant fixée à l'intérieur du pied 9, l'autre zone d'appui venant en contact avec la partie inférieure du plateau 1.

Les signaux de mesure issus du circuit de mesure du poids et ceux de mesure de l'impédance bioélectrique du corps de l'individu sont transmis à une carte électronique à microprocesseur qui calcule les taux de masse grasse, de masse maigre et qui envoie les résultats calculés ainsi que le poids mesuré à l'afficheur 6.

Dans l'exemple présenté, les électrodes 2,3,4,5 sont des plaques métalliques en inox découpées d'une bande et embouties pour obtenir les formes et les dimensions souhaitées. A titre d'exemple une électrode 2, tel que mieux visible à la figure 2a, a une forme ovale de dimensions 60mmx100mm. Sur toute la surface métallique de l'électrode 2 destinée au contact de la plante des pieds de l'utilisateur est réalisée une impression par sérigraphie en faisant passer une encre colorée ou un vernis coloré à travers un écran de soie. Le motif obtenu après sérigraphie est mieux visible à la figure 2b où des gouttes d'encre forment des points 12 uniformément répartis sur la surface conductrice 11 non couverte de l'électrode 2.

On préfère, les encres colorées époxy, car elles ont de bonnes tenues au frottement et au nettoyage à l'eau, à l'alcool, au savon ou détergent.

Le motif réalisé par une coloration par points et représenté à la figure 2b a été obtenu en utilisant une trame de 60 points /cm et une couvrance de 50%. Lors des mesures d'impédance effectuées au laboratoire avec le pèse-personne impédancemètre de l'invention comportant des électrodes réalisées comme décrit, on a constaté que les résultats de ces mesures étaient équivalents à ceux réalisés avec un appareil à électrodes en inox non couvertes de dépôt isolant. Pour les encres et vernis utilisés, une couvrance de 50% permet d'obtenir des points isolés de matériau isolant séparés par des ponts conducteurs. De surcroît, on obtient de bons résultats de coloration avec une impression de coloration globale lorsque regardé à distance, par exemple lorsque l'appareil est posé sur le sol et l'utilisateur le guigne en se tenant debout à côté.

D'autres variantes et modes de réalisation de l'invention peuvent être envisagés sans sortir du cadre de ces revendications.

Ainsi, les points 12 peuvent avoir toute autre forme géométrique souhaitée (carrée, rectangulaire, polygonale, elliptique, en étoile, etc.) et toute couleur souhaitée pour l'assortir à celle du plateau de mesure de l'appareil ou à l'environnement (couleur de la salle de bain, etc.).

Dans une variante de l'invention, le dépôt isolant peut être réalisé sous forme de traits ou de points plus rapprochés par endroits de manière à obtenir un dessin ou motif spécifique (par exemple des cercles concentriques, un effet moiré, un dessin d'empreintes, etc.)

Dans une autre variante de l'invention, le plateau de mesure est transparent (réalisé par exemple en verre), les électrodes sont de préférence transparentes en étant réalisées par un dépôt d'ITO ou de SnO₂ électriquement conducteur sur le plateau transparent et le dépôt isolant est, lui aussi, transparent en étant réalisé à base d'une résine polyuréthane ou une colle acrylique ou époxy déposée sur le support et polymérisant sur place. Un tel dépôt isolant assure à la fois un toucher doux et empêche la glisse sur une surface lisse comme celle du verre.

## Revendications

1. Pèse-personne impédancemètre comportant un plateau (1) de mesure supporté par une base de pesée qui comprend au moins un capteur de poids, le plateau de mesure étant muni d'au moins deux électrodes (2,3,4,5) destinées au contact des pieds de l'individu lors d'une prise de mesure, lesdites électrodes étant reliées à un circuit électrique de mesure de l'impédance bioélectrique et d'affichage de la composition corporelle de l'individu, **caractérisé en ce que** la partie de contact desdites électrodes (2,3,4,5) comporte un support ou une couche en un matériau électriquement conducteur partiellement recouvert d'un dépôt en un matériau électriquement isolant.

2. Pèse-personne impédancemètre selon la revendication 1, **caractérisé en ce que** ledit matériau électriquement isolant est déposé de manière à délimiter sur ledit support au moins deux surfaces électriquement conductrices et un pont conducteur les reliant.

3. Pèse-personne impédancemètre selon l'une des revendications 1 ou 2, , **caractérisé en ce que** ledit matériau électriquement isolant est un vernis ou une encre d'imprimerie.

4. Pèse-personne impédancemètre selon la revendication 3, **caractérisé en ce que** ledit matériau isolant est déposé sous forme de plusieurs traits rapprochés sur ledit support.

5. Pèse-personne impédancemètre selon l'une des revendications 3 ou 4, **caractérisé en ce que** ledit matériau isolant est déposé sous forme de plusieurs points rapprochés et uniformément répartis sur le support conducteur.

6. Pèse-personne impédancemètre selon la revendication 5, **caractérisé en ce que** ledit matériau isolant présente une trame de 60 points/cm pour une couvrance inférieure ou égale à 50%.

7. Pèse-personne impédancemètre selon l'une des revendications précédentes, **caractérisé en ce que** ledit dépôt est réalisé par une technique de sérigraphie sur ledit support.

8. Pèse-personne impédancemètre selon la revendication 1, **caractérisé en ce que** ledit matériau isolant est une résine polyuréthane ou une colle acrylique ou époxy déposées sous' forme de plusieurs traits rapprochés sur ladite couche ou sur ledit support en un matériau électriquement conducteur.

## Patentansprüche

1. Personen-Diagnosewaage bestehend aus einer Messplatte (1), die auf einer Wiegebasis aufliegt, welche mindestens einen Gewichtssensor umfasst, wobei die Messplatte mit mindestens zwei Elektroden (2,3,4,5) zum Herstellen des Kontakts mit den Füßen der Person ausgestattet ist und diese Elektroden mit einem elektrischen Schaltkreis zum Messen der bioelektrischen Impedanz und zur Anzeige der Körperzusammensetzung der Person verbunden sind, der **dadurch gekennzeichnet ist, dass** das Kontaktteil der genannten Elektroden (2,3,4,5) einen Träger oder eine Schicht aus elektrisch leitfähigem Material aufweist, der bzw. die mit einem Überzug aus einem elektrisch isolierenden Material versehen ist.

2. Personen-Diagnosewaage nach Patentanspruch 1, **gekennzeichnet dadurch, dass** das genannte elektrisch isolierende Material auf eine Art und Weise aufgebracht ist, dass auf dem genannten Träger mindestens zwei elektrisch leitfähige Flächen und ein diese verbindendes leitfähiges Brückenelement abgegrenzt werden.

3. Personen-Diagnosewaage nach einem der Patentansprüche 1 oder 2, **gekennzeichnet dadurch, dass** es sich bei dem genannten elektrisch isolierenden Material um einen Druckfirnis oder eine Druckfarbe handelt.

4. Personen-Diagnosewaage nach Patentanspruch 3, **gekennzeichnet dadurch, dass** das genannte isolierende Material in mehreren Linien auf dem genannten Träger aufgebracht wird.

5. Personen-Diagnosewaage nach einem der Patentansprüche 3 oder 4, **gekennzeichnet dadurch, dass** das genannte isolierende Material in Form mehrerer Punkte auf dem leitfähigen Träger aufgebracht und gleichmäßig verteilt wird.

6. Personen-Diagnosewaage nach Patentanspruch 5, **gekennzeichnet dadurch, dass** das genannte isolierende Material ein Raster aus 60 Punkten/cm bildet, so dass eine Deckung von maximal 50 % erreicht wird.

7. Personen-Diagnosewaage nach einem der vorstehenden Patentansprüche, **gekennzeichnet dadurch, dass** der genannte Überzug unter Anwendung einer Siebdrucktechnik auf dem genannten Träger aufgebracht wird.

8. Personen-Diagnosewaage nach Patentanspruch 1, **gekennzeichnet dadurch, dass** es sich bei dem genannten isolierenden Material um ein Polyurethanharz oder um einen Acryl- oder Epoxidkleber handelt, das bzw. der in mehreren Linien auf der genannten Schicht bzw. auf dem genannten Träger aus einem elektrisch leitfähigen Material aufgebracht wird.

## Claims

1. Impedance meter weighing scales comprising a measuring plate (1) supported by a weighing base which includes at least one weight sensor, the measuring plate being equipped with at least two electrodes (2,3,4,5) coming into contact with a person's feet when weighing, said electrodes being connected to an electric circuit for measuring the bioelectric impedance and displaying the body composition of the person, **characterised in that** the contact part of said electrodes (2,3,4,5) comprises a support or a layer made from a partially electrically conducting material covered with a deposit made from an electrically insulating material.

2. Impedance meter weighing scales according to claim 1, **characterised in that** said electrically insulating material is deposited so as to mark out on said support at least two electrically conducting surfaces and a conducting bridge connecting them together.

3. Impedance meter weighing scales according to claim 1 or 2, **characterised in that** said electrically insulating material is a varnish or a printing ink.

4. Impedance meter weighing scales according to claim 3, **characterised in that** said insulating material is deposited as several lines close together on said support.

5. Impedance meter weighing scales according to claim 3 or 4, **characterised in that** said insulating material is deposited as several points close together and uniformly distributed on the conducting support.

6. Impedance meter weighing scales according to claim 5, **characterised in that** said insulating material forms a grid of 60 points/cm for a coverage of less than or equal to 50 %.

7. Impedance meter weighing scales according to one of the preceding claims, **characterised in that** said deposit is made by a screen-printing technique on said support.

8. Impedance meter weighing scales according to claim 1, **characterised in that** said insulating material is a polyurethane resin or an acrylic or epoxy adhesive deposited as several lines close together on said layer or on said support made from an electrically conducting material.
